# EUROPEAN PATENT APPLICATION

(11) **EP 2 955 668 A1**
(43) Date of publication of application: **16.12.2015**
(21) Application number: 13874720.9
(22) Date of filing: 04.09.2013
(51) Int. Cl.: G06K 19/077

(54) **MOBILE PHONE SUBSCRIBER IDENTITY CARD BASED ON MULTICHANNEL DIGITAL AUTHENTICATION OF MOBILE PAYMENT**

(30) Priority: 06.02.2013 CN 201310048174
(71) Applicant: Xiamen Elite Electric Co., Ltd., Fujian 361004 (CN)
(72) Inventor: LI, Kin Shing, Hong Kong (CN); EDDIE, Kw ok Yiu Fai, Hong Kong (CN); LAN, Xianchun, Xiamen Fujian 361004 (CN); WANG, Zhanqi, Xiamen Fujian 361004 (CN); ZHAO, Chengwu, Xiamen Fujian 361004 (CN)
(74) Representative: Izquierdo Blanco, Maria Alicia
(86) International application number: PCT/CN2013/082925
(87) International publication number: WO 2014/121603

(57) **Abstract**

The present invention discloses a mobile phone subscriber identity card on multichannel digital authentication of mobile payment, including a card body and an in-card circuit integrated in the dimensional space of the card body. The in-card circuit includes an MCU security chip; one or more digital authentication certificates are stored in the MCU security chip, and a digital certificate authentication processing module for processing an authentication process of the digital authentication certificate is provided therein; the in-card circuit further includes a data link for transmitting data of the digital authentication process; and the digital certificate authentication processing module of the MCU security chip is connected to the mobile phone terminal through the data link, and is connected to a third-party authentication institution through a network resource of the mobile phone terminal in an online manner, so as to conduct digital certificate authentication. The mobile payment performed by the mobile phone subscriber identity card using the mobile phone terminal cannot be limited by telecommunication operators and financial banks, but is commanded by the subscriber, thereby achieving the object of realizing the mobile payment for various consumptions securely, quickly and conveniently.

## Description

### TECHNICAL FIELD

The present invention relates to a mobile phone smart card, and more particularly, to a mobile phone subscriber identity card on multichannel digital authentication of mobile payment.

### BACKGROUND

Mobile payment may include remote payment and proximity payment

Remote payment refers to using such air interfaces like short messages, GPS, and the like, to establish connection with a background payment system through a mobile network, so as to implement payment functions like various transfer, consumption and the like. Remote payment includes payment behaviors realized through sending an SMS via a mobile terminal and payment behaviors finished by landing a mobile internet via a mobile terminal. Its capital sources for payment include telephone charge account, bank account and a special payment account provided by a payment institution.

Proximity payment refers to a payment method which uses a mobile terminal having a near field communication technology to realize localized communications to transfer monetary capitals. The major technical backstopping includes such near field communication technologies as NFC, RFID, etc. Terminal forms include a specially-made SIM card, a mobile phone patch, an SD card or a customized mobile terminal, etc.

At present, there are still some technical problems during the specific implementation of developing the mobile payment, which particularly include the followings.

1. Customers while using a mobile payment product, cannot pay freely according to their own will. The reason is that: the financial payment for a subscriber to pay mobile consumptions is bound to telecommunication operators, and the money for the subscriber used for payment is the "telephone charge" deposited by the subscriber substantially. At present, the mobile phone payment is managed by the telecommunication operators. Different telecommunication operators not only determine different mobile payment product forms, but also determine the consumption targets and service contents. In other words, the subscriber of China Mobile can only by the products or services of China Mobile, and the subscriber of China Telecom can only by the products or services of China Telecom, and interworking cannot be implemented.

2. Banks hold the monetary capitals of the subscriber, while the telecommunication operators hold the payment tool of the subscriber. There is no preferred solution for the subscriber to control the interworking of the monetary capitals and the payment tools by himself/herself at present. In short, the subscriber has not been offered with an effective method to transfer the money deposited in the bank to the mobile payment tool and hold the self-owned E-wallet by himself/herself.

3. The key point for the telecommunication operators to control the subscriber to use its network and terminal is a mobile phone subscriber identity card (SIM card), which actually is also a digital authentication certificate issued to the subscriber. The digital certificate is safe at present, but is also exclusive. At present, the telecommunication operators cannot and may not develop the digital certificate to a third party for use at present.

### SUMMARY

The object of the present invention is to provide a mobile phone subscriber identity card on multichannel digital authentication of mobile payment directed to overcoming the defects of the prior art, which stores one or more digital authentication certificates issued and authenticated by a third-party authentication institution different from telecommunication operators and financial banks in the mobile phone subscriber identity card, and enables the mobile payment conducted using the mobile phone terminal to be not limited by the telecommunication operators and the financial banks, but commanded by the subscriber through setting a special certificate authentication channel in the mobile phone subscriber identity card, thereby achieving the object of realizing the mobile payment for various consumptions securely, quickly and conveniently.

To solve the technical problems, the present invention employs a technical solution as follows: a mobile phone subscriber identity card on multichannel digital authentication for mobile payment includes a card body and an in-card circuit integrated in the dimensional space of the card body, wherein the in-card circuit includes an MCU security chip, a radio frequency driving unit, a radio frequency antenna and an SIM card standard copper connecting contacts; the radio frequency antenna, the radio frequency antenna, the MCU security chip and the SIM card standard copper connecting contacts are connected in sequence; subscriber identity authentication information for implementing mobile communication is stored in the MCU security chip, the MCU security chip is connected to a mobile phone terminal through the SIM card standard copper connecting contacts, so as to send the subscriber identity authentication information to the mobile phone terminal, and then the mobile phone terminal conducts subscriber identity authentication with a telecommunication operator; and an E-wallet for implementing payment based on near field communication is also stored in the MCU security chip, and the MCU security chip is matched with an external card reader through the radio frequency driving unit and the radio frequency antenna, so as to implement the payment function of the E-wallet.

One or more digital authentication certificates are also stored in the MCU security chip; the digital authentication certificate is an electronic document that uniquely binds the personal identity information of the mobile phone subscriber to an electronic signature, is applied by the mobile phone subscriber from a third-party authentication institution, issued by the third-party authentication institution, and is written in the MCU security chip by a designated institution having a certain authority; the MCU security chip is also provided with a digital certificate authentication processing module for processing an authentication process of the digital authentication certificate; and the in-card circuit further comprises a data link for being connected between the MCU security chip and the mobile phone terminal, and is used for transmitting data of the digital authentication process.

The digital certificate authentication processing module of the MCU security chip is connected to a mobile phone terminal through the data link, and is connected to the third-party authentication institution through a network resource of the mobile phone terminal in an online manner, so as to conduct digital certificate authentication.

The data link employs an ISO7816 interface of the MCU security chip and the mobile phone terminal as a connection channel, and implements data stream communications of the mobile phone terminal and the mobile phone subscriber identity card under the ISO7816 interface on digital certificate operation and processing through expanding an APDU instruction set.

The data link employs a data transmission channel newly added between the MCU security chip and the mobile phone terminal and reflected in a hardware manner, so as to implement data transmission between the mobile phone terminal and the digital certificate authentication processing module of the MCU security chip.

The data transmission channel reflected in a hardware manner is a wired transmission channel or wireless transmission channel.

The data link employs an element additionally disposed on the mobile phone subscriber identity card and matched with an existing data transmission device of the mobile phone terminal, so as to implement matching butt with the existing resource of the mobile phone, thus implementing the data transmission between the mobile phone terminal and a digital certificate authentication and processing device.

The element is a bluetooth protocol processing element disposed in the radio frequency driving unit.

According to the mobile phone subscriber identity card on multichannel digital authentication of mobile payment of the present invention, a multichannel digital authentication certificate is designed, which is neither limited by the telecommunication operators or by the financial banks, but is issued and authenticated by the third-party authentication institution and is commanded by the subscriber himself/herself. CA (Certificate Authority) short for a digital certificate authentication center is an institution that issues, manages and abolishes the digital certificate. The function of CA is to check the identity legitimacy of a certificate holder, and issue the certificate (sign on the certificate), so as to prevent the certificate from being faked or falsified, and manage the certificate and key.

According to the mobile phone subscriber identity card on multichannel digital authentication of mobile payment of the present invention, the mobile phone subscriber identity card (SIM) is used as a carrier to establish a digital certificate processing and operating device using the encryption and operation ability of a storage unit and the MCU security chip in the SIM card. This so-called digital certificate is an an electronic document that uniquely binds the personal identity information of the mobile phone subscriber to an electronic signature, which establishes a personnel certificate authentication system based on public key (PKI) technology, implements identity authentication on the online transactions of the subscriber through personnel certificate authentication and digital signature technology, and can sign various business service protocols, and ensures the unique, integral and undeniable transaction and protocol. The digital certificate using the mobile phone subscriber identity card (SIM) as a carrier may be called as "CA-SIM". Although it is stored in the SIM card, it does not have any relationship to the telecommunication operators, but is issued and identified by the third-party authentication institution. During the specific operation of implementing mobile payment, the subscriber can command the digital certificate by himself/herself, and finishes the PKI authentication flow according to the service flows of different merchants independently.

The mobile phone subscriber identity card on multichannel digital authentication of mobile payment of the present invention takes the mobile phone subscriber identity card which possesses non-contact near field wireless communication function and supports mobile payment as a platform, which may either employ 2.4G communication frequency or 13.56M communication frequency. A second or more multichannel subscriber security digital certificate authentication and processing devices excluding telecommunication are designed, and a smart card security chip is used as a processing and operating device to finish the operation and processing on the digital certificate. The mobile phone subscriber identity card conducts data communication with a smartphone through a data processing device internally equipped with the digital certificate, and a transmission link. A smartphone terminal under the management of an operating system OS operates an application APPS, and finishes the authentication flow of the user PKI (abbreviation of Public Key Infrastructure, referring to security infrastructure having universality which implements and provides security services using public key concepts and technologies) with a digital authentication CA center.

The present invention has the advantageous effects that one or more digital authentication certificates are stored in the MCU security chip, and the digital authentication certificate is an electronic document that uniquely binds the personal identity information of the mobile phone subscriber to an electronic signature, is applied by the mobile phone subscriber from a third-party authentication institution, issued by the third-party authentication institution, and is written in the MCU security chip by a designated institution having a certain authority; the MCU security chip is also provided with a digital certificate authentication processing module for processing an authentication process of the digital authentication certificate; and the in-card circuit further comprises a data link for being connected between the MCU security chip and the mobile phone terminal, and is used for transmitting data of the digital authentication process; and the digital certificate authentication processing module of the MCU security chip is connected to a mobile phone terminal through the data link, and is connected to the third-party authentication institution through a network resource of the mobile phone terminal in an online manner, so as to conduct digital certificate authentication; therefore, the mobile payment performed by the mobile phone subscriber identity card using the mobile phone terminal cannot be limited by telecommunication operators and financial banks, but is commanded by the subscriber, thereby achieving the object of realizing the mobile payment for various consumptions securely, quickly and conveniently.

Because the subscriber applies the digital certificate at the third-party authentication institution by himself/herself, and applies a payment account at the financial bank thereof according to an effective and legal authentication institution; when the subscribe holding the SIM card having multichannel digital authentication certificate according to the present invention, the mobile payment of various consumptions can be securely, quickly and conveniently realized at the payment spots of the merchants through corresponding mobile phone terminals.

Because the mobile phone subscriber identity card, i.e., SIM card, has security, unduplicatedness and uniqueness as well as other characteristics thereof, it is more advanced and preferable to select the SIM card as the carrier of the digital certificate according to the present invention rather than to select a mobile phone terminal or other mobile electronic devices.

The present invention employs a technical means to turn the passive situation of the mobile payment at present, which enables the subscriber to determine consumptions thereof like the online payment for network shopping, enables the subscribe to positively participate in mobile payment activities, and implements the object of prompting the development of the mobile payment according to the market rules.

The present invention will be further described in details hereinafter with reference to the drawings and embodiments; but the mobile phone subscriber identity card on multichannel digital authentication of mobile payment of the present invention is not limited to the embodiments.

### BRIEF DESCRIPTION OF THE DRAWINGS

Fig. 1 is a circuitry block diagram of the present invention; and
Fig. 2 is a transmission block diagram of a data link of the present invention.

### DETAILED DESCRIPTION

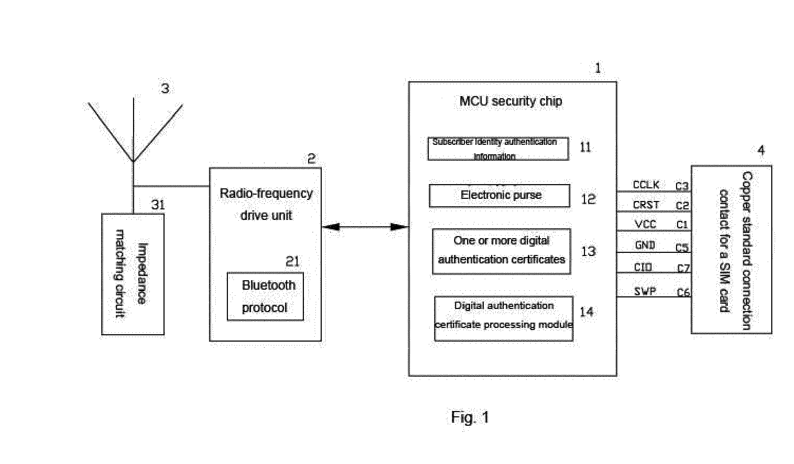

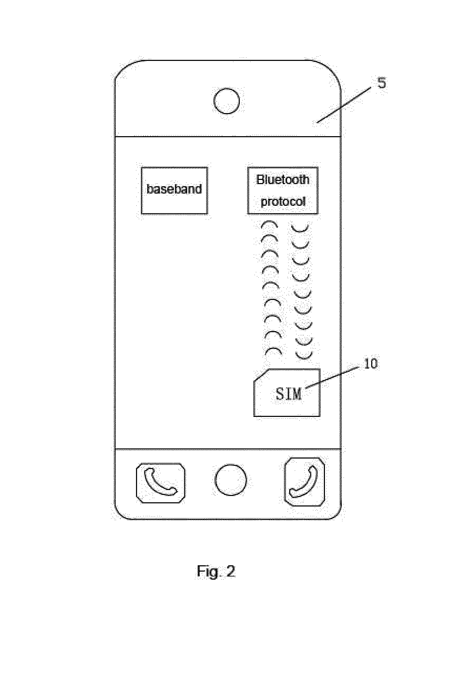

Embodiment: Fig. 1 and Fig. 2, shows a mobile phone subscriber identity card on multichannel digital authentication of mobile payment of the present invention, wherein the mobile phone subscriber identity card 10 includes a card body and an in-card circuit integrated in the dimensional space of the card body.

The in-card circuit includes an MCU security chip 1, a radio frequency driving unit 2, a radio frequency antenna 3 and an SIM card standard copper connecting contacts. The MCU security chip 1, the radio frequency driving unit 2, the radio frequency antenna 3 and the SIM card standard copper connecting contacts are connected in sequence.

Subscriber identity authentication information 11 for implementing mobile communication is stored in the MCU security chip 1, the MCU security chip 1 is connected to a mobile phone terminal 5 through the SIM card standard copper connecting contacts 4, so as to send the subscriber identity authentication information to the mobile phone terminal 5, and then the mobile phone terminal 5 conducts subscriber identity authentication with a telecommunication operator; an E-wallet for implementing payment based on near field communication 12 is also stored in the MCU security chip 1, and the MCU security chip 1 is matched with an external card reader through the radio frequency driving unit 2 and the radio frequency antenna 3, so as to implement the payment function of the E-wallet.

One or more digital authentication certificates 13 are also stored in the MCU security chip 1; the digital authentication certificate is an electronic document that uniquely binds the personal identity information of the mobile phone subscriber to an electronic signature, is applied by the mobile phone subscriber from a third-party authentication institution, issued by the third-party authentication institution, and is written in the MCU security chip 1 by a designated institution having a certain authority; the MCU security chip 1 is also provided with a digital certificate authentication processing module 14 for processing an authentication process of the digital authentication certificate; and the in-card circuit further comprises a data link for being connected between the MCU security chip and the mobile phone terminal, and is used for transmitting data of the digital authentication process.

The digital certificate authentication processing module 14 of the MCU security chip is connected to a mobile phone terminal 5 through the data link, and is connected to the third-party authentication institution through a network resource of the mobile phone terminal 5 in an online manner, so as to conduct digital certificate authentication.

An impedance matching circuit 31 is also disposed between the radio frequency driving unit 2 and the radio frequency antenna 3.

In the embodiment, the data link employs a processing element additionally disposed on the mobile phone subscriber identity card and matched with an existing data transmission device of the mobile phone terminal, so as to implement matching butt with the existing resource of the mobile phone, thus implementing the data transmission between the mobile phone terminal and a digital certificate authentication and processing device.

The processing element is a bluetooth protocol processing element 21 disposed in the radio frequency driving unit 2.

Certainly, the data link employs an ISO7816 interface of the MCU security chip and the mobile phone terminal as a connection channel, and implements data stream communications of the mobile phone terminal and the mobile phone subscriber identity card under the ISO7816 interface on digital certificate operation and processing through expanding an APDU instruction set. Or, the data link may further employ a data transmission channel newly added between the MCU security chip and the mobile phone terminal and reflected in a hardware manner, so as to implement data transmission between the mobile phone terminal and the digital certificate authentication processing module of the MCU security chip. The data transmission channel reflected in a hardware manner is a wired transmission channel or wireless transmission channel.

According to the mobile phone subscriber identity card on multichannel digital authentication of mobile payment of the present invention, a multichannel digital authentication certificate is designed, which is neither limited by the telecommunication operators or by the financial banks, but is issued and authenticated by the third-party authentication institution and is commanded by the subscriber himself/herself. CA (Certificate Authority) short for a digital certificate authentication center is an institution that issues, manages and abolishes the digital certificate. The function of CA is to check the identity legitimacy of a certificate holder, and issue the certificate (sign on the certificate), so as to prevent the +certificate from being faked or falsified, and manage the certificate and key.

According to the mobile phone subscriber identity card on multichannel digital authentication of mobile payment of the present invention, the mobile phone subscriber identity card (SIM) is used as a carrier to establish a digital certificate processing and operating device using the encryption and operation ability of a storage unit and the MCU security chip in the SIM card. This so-called digital certificate is an electronic document that uniquely binds the personal identity information of the mobile phone subscriber to an electronic signature, which establishes a personnel certificate authentication system based on public key (PKI) technology, implements identity authentication on the online transactions of the subscriber through personnel certificate authentication and digital signature technology, and can sign various business service protocols, and ensures the unique, integral and undeniable transaction and protocol. The digital certificate using the mobile phone subscriber identity card (SIM) as a carrier may be called as "CA-SIM". Although it is stored in the SIM card, it does not have any relationship to the telecommunication operators, but is issued and identified by the third-party authentication institution. During the specific operation of implementing mobile payment, the subscriber can command the digital certificate by himself/herself, and finishes the PKI authentication flow according to the service flows of different merchants independently.

Because the subscriber applies the digital certificate at the third-party authentication institution by himself/herself, and applies a payment account at the financial bank thereof according to an effective and legal authentication institution; when the subscribe holding the SIM card having multichannel digital authentication certificate according to the present invention, the mobile payment of various consumptions can be securely, quickly and conveniently realized at the payment spots of the merchants through corresponding mobile phone terminals.

The mobile phone subscriber identity card on multichannel digital authentication of mobile payment of the present invention takes the mobile phone subscriber identity card which possesses non-contact near field wireless communication function and supports mobile payment as a platform (referring to ZL200410036263.4 "Mobile Phone Smart Card with Wireless RF Communication Function and Supporting Peripheral Processing Device" disclosed by China Patent Database), which may either employ 2.4G communication frequency or 13.56M communication frequency. A second or more multichannel subscriber security digital certificate authentication and processing devices excluding telecommunication are designed, and a smart card security chip is used as a processing and operating device to finish the operation and processing on the digital certificate.

The mobile phone subscriber identity card on multichannel digital authentication of mobile payment of the present invention establishes a data link with the digital certificate authentication and processing device in the mobile phone terminal, wherein the data link can be realized via multiple methods, which can be the methods as follows.

In the first method, an ISO7816 interface of a smart card security chip and the mobile phone terminal is taken as a connection channel, and an instruction set is expanded, so as to implement the data stream communications of the mobile phone terminal and the SIM card under the ISO7816 interface on digital certificate operation and processing. This link can be called as "logic CA link".

In the second method, another physical data transmission channel is re-developed through a non "logic CA link" manner, i.e., excluding not changing the technical standards of ISO7816 and APDU instruction, wherein this transmission channel can either be wired or wireless. This link can be temporarily called as " expanded CA link".

In the third method, the existing technical platforms of the mobile phone terminal, for example, such data transmission devices like bluetooth, SWP, NFC, USB, may also be utilized to make proper device resource extension at one end of the mobile phone smart card only, so as to finish the matching butt with the existing resources of the mobile phone, wherein this link can be temporarily called as "utility CA link".

The mobile phone subscriber identity card SIM is an abbreviation of Subscriber Identity Module ( Subscriber Identity Module), which is also called as a mobile phone smart card. Various digital mobile phones cannot be used unless the subscriber identify card is equipped. The SIM card according to the present invention employs multichannel digital authentication. In the SIM card, not only telecommunication IMSI (international mobile subscriber identity) is stored, but also one or more digital authentication certificates are stored in a specific and secure manner. Similar to the SIM card, the digital certificate has security, unduplicatedness and uniqueness. Therefore, it can be called as a CA-SIM card.

The CA-SIM card conducts data communication with a smartphone through a data processing device internally equipped with the digital certificate, and a transmission link. A smartphone terminal under the management of an operating system OS operates an application APPS, and finishes the authentication flow of the user PKI (abbreviation of Public Key Infrastructure, referring to security infrastructure having universality which implements and provides security services using public key concepts and technologies) with a digital authentication CA center.

The mobile phone subscriber identity card on multichannel digital authentication of mobile payment of the present invention is to divide a plurality of storage rooms in the storage device of the MCU security chip in the SIM card, wherein each storage room corresponds to one digital authentication certificate. The CA digital certificate is issued by the CA authentication center or operator, and written by a vendor or authorized institution having security authentication qualification; the processing and operating device of the CA digital certificate is implemented through MCU security chip software, and is packed into a form of an application interface. The CA link can be established through three methods, wherein the "logic CA link" and the "expanded CA link" usually need to be finished by a mobile phone terminal manufacturer or a mobile phone vendor opening platform, and a mobile phone terminal customized by the operators. while the "utility CA link" can be implemented by a non-mobile phone terminal vendor. In the embodiment, the standard configuration "bluetooth communication" of the smartphone terminal popular in the present market is taken as the technical background to implement a bluetooth communication module paired with the mobile phone terminal to realize the "CA link" and finish the data transmission of the PKI flow. The mobile phone subscriber after obtaining and finishing CA authentication can finish mobile payment through implementing near field communication with the POS of the merchant through non-contact connection.

A core element of the mobile phone subscriber identity card on multichannel digital authentication of mobile payment of the present invention is a MCU security chip 1 based on a smart card, wherein the MCU security chip 1 usually includes EEPROM, SRAM, FLASH, universal I/O interface, ISO7816 interface and built-in hardware encryption processor, and the like. In the memory area of the MCU security chip, a specific room is developed for storing the CA digital certificate. According to system requirements and product specifications, one or more digital certificate storage areas can be provided, and these digital certificates are represented as CA1, CA2, ..., CAn. On the aspect of software design, initialization processing is conducted according to the format and byte length of the digital certificate. The system software of the MCU security chip (also called as COS) includes an application interface (APP function) specially configured to process the CA digital certificate, i.e., the digital certificate authentication processing module 14. The ISO7816 interface in the MCU security chip is specially configured to be connected with the mobile phone terminal through copper contacts on the card body and according to a standard connection manner for SIM, thus composing a subscriber identity SIM card that complies with the telecommunication standards.

The MCU security chip is connected with the radio frequency driving unit 2 through a self-provided universal I/O interface. This radio frequency driving unit can be a single chip, or be formed by multiple chips, including the non-contact near field communication function, for example, supporting 2.4G radio frequency wireless transmission or 13.56M proximity inducing and coupling communications. The non-contact near field communication function is configured to connect with peripheral POS device during on-spot mobile payment for conduct data transmission for the payment transactions.

The radio frequency driving unit 2 is also responsible for establishing a data link between the mobile phone terminal 5 and the digital certificate authentication and processing device. The radio frequency driving unit 2 includes a bluetooth protocol processing element 21 universal on the smartphone terminal, which may either be an independent element in a radio frequency processing unit, or be shared or implement time sharing work with other radio frequency processing elements (for example, 2.4G radio frequency wireless communication). The bluetooth protocol processing unit is specially used for matching butt with a bluetooth processing signal of the mobile phone terminal, so as to establish a channel specially configured to process the operation and data transmission of the digital certificate authentication PKI flow. An APPS subscriber application of the mobile phone terminal conducts real time authority authentication operation on the operation data result of the digital authentication and PKI with the online CA authentication center, so as to finish the digital authentication.

The bluetooth processing element of the radio frequency driving unit automatically finishes the matching butt with the bluetooth element of the mobile phone terminal and establishes the so-called "CA link" when the system is started.

According to the same method, the radio frequency driving unit may also establish a link for a device communication protocol identical to the protocol of the mobile phone terminal through 13.56M SWP protocol or the processing mode of an NFC protocol unit of the mobile phone itself, wherein this link can be wired, likeSWP manner and USB manner, and may also be wireless, like bluetooth or 13.56M protocol. At a mobile phone terminal supporting the SWP mode, a C6 pin in an SIM card holder thereof is an SWP signal introduction contact, and the MCU security chip in the SIM card is connected with an SWP signal through the C6 pin on the card body. In the SIM card holder supporting USB, C4 and C8 pins refer to interface D+ and D-signal wires of the USB, and the signal interfaces of the USB can also be utilized to establish a link on the device communication protocol identical to the protocol of the mobile phone terminal.

The authentication process of the digital certificate of the mobile phone subscriber identity card according to the present invention will be explained in details hereinafter.

The digital certificate is issued by a third-party CA center. The subscriber may apply the digital certificate at the CA center through a proper manner, for example, online application, submitting materials for application at a business hall face to face, group application via organization, or application via subscriber institution.

Each certificate has a pair of public-private key pairs, wherein the private key is used for signing, and the public key is used for un-signing. The private key is stored locally at the certificate holder, and the public key will be stored in the certificate. Each user trusts the CA. While applying a certificate, the subscriber will send the public key and some information thereof to the CA, then the CA uses the private key thereof to sign the certificate of the subscriber. The user will also download the certificate of the CA to the local thereof. During authentication between subscribers, the subscriber will use the private signature information of the certificate and send the certificate to the opposite side as well. The opposite side, after receiving the certificate, firstly uses the public key in the CA certificate to verify whether the subscriber certificate received is believable or not. If it is believable, then the opposite side just uses the public key in the certificate received to un-sign the message, thus finishing the authentication. The digital certificate generated after finishing the authentication is saved in the CA authentication center, and the subscriber may obtain the encrypted digital certificate file through a proper manner, for example, downloading at the business hall, online downloading, batch downloading via organization, etc. This digital file is finally stored in the mobile phone subscriber identity card on multichannel digital authentication of mobile payment according to the present invention. This digital file is secure, unduplicated and unique.

The authentication of the digital certificate is a very complicated process, which can be described using the comparison as follows. The digital certificate of the subscriber is just like a resident ID card, the ID card is issued by the government, while CA is just like the government, and everyone trusts the government. Two people not familiar to each need to show the ID cards for mutual trust. According to this principle, the application operation flow of the mobile phone subscriber identity card on multichannel digital authentication of mobile payment according to the present invention will be described in details hereinafter.

The mobile payment types can be divided into the two types as follows.
1. Mobile payment based on rated or variable consumptions, for example, mobile payment of public traffic and merchant spots.
2. Based on the issuing and transferring of merchant negotiable securities and financial values.

No matter which form of mobile payment is employed, a mobile payment transaction relating to digital certificate authentication can be included into operation flows for the two situations below.

First situation: by using a legal and effective digital certificate in the mobile phone subscriber identity card on multichannel digital authentication of mobile payment according to the present invention as an identity basis and conducting online authentication between an APPS of a smartphone terminal and a CA authentication center, the subscriber transfers temporary money to the prepaid E-wallet, thus finishing on-spot mobile payment based on rated or variable consumptions.

### First step:

The subscriber holds a mobile phone terminal inserted with the mobile phone subscriber identity card on multichannel digital authentication of mobile payment according to the present invention and stored with an effective digital certificate. The subscriber sends a payment application to a self-owned bank account via an online manner through an APPS application under a mobile phone subscriber interface, and meanwhile the APPS starts a bluetooth channel of the mobile phone terminal and sends shake-handing information to the SIM card; an N1 radio frequency unit in the SIM card once receiving the request from the APPS of the mobile phone, will configure the radio frequency unit into a bluetooth mode matched with the mobile phone to establish a "CA link". Various interaction data of the digital authentication is prepared to be transmitted in anytime. When the bank needs to acquire the identity information of the subscriber, a "CA certificate processing unit" in an SIM module will send corresponding personal digital certificate CA1 or CAn to the APPS end of the mobile phone terminal through the established "CA" link. The APPS end acquires authority authentication and certification from the bank or a third-party authentication center through the online network of a mobile phone system. Because the entire process and data transmission are conducted according to an encryption algorithm and a key agreed by the two parties in advance, after the trueness of the identities of the two parties are verified, a secure encryption channel will be established between the subscriber and the bank; at this moment, the subscriber can land personnel online banking safely.

### Second step:

When the identities of the subscriber and the bank are completely verified, all operation instructions of the subscriber conducted on the account will be transmitted in the secure encryption channel, and nobody can falsify this information online, or intercept the account information of the subscriber. The subscriber usually transfer a certain amount of money from a cash account in the bank thereof to the E-wallet in the mobile phone subscriber identity card on multichannel digital authentication of mobile payment according to the present invention, i.e.: The subscriber charges or prepays a certain amount of money in the E-wallet by himself/herself, so as to facilitate the consumption expenditures via a mobile payment manner of swiping card.

The subscriber may also transfer a determined amount of money to the E-wallet in the mobile phone subscriber identity card on multichannel digital authentication of mobile payment according to the present invention from the cash account in the bank according to the spot commodity price of the merchant, and directly finish the consumption expenditures via a mobile payment manner.

An electronic signature has been made for the operating time, operating type and operating money of this transaction conducted with the bank by the digital certificate system of the subscriber and saved. This saved and unchanged signature can be used to verify whether such a transaction exists at that time in the future, so as to provide a factual evidence for possible dispute about the network transaction.

### Third step:

The amount of money transferred from the subscribe via online banking is firstly stored in the E-wallet in the mobile phone subscriber identity card on multichannel digital authentication of mobile payment according to the present invention. If the subscribe holds the mobile phone to swipe card and finish the mobile payment at the spot of the merchant, an MCU program in the SIM card and a POS surrounding the mobile phone realize near field wireless communication using a wireless radio frequency 2.4G or 13.56M non-contact channel in the SIM card, so as to finish the data transmission of the payment transaction, deduct the transaction amount of money stored in the E-wallet, and finally finish the mobile payment of the mobile phone via swiping card, for example: rated consumption like swiping card to take public traffic.

Similarly, if the consumption is based on the commodity price at the spot of the merchant, the amount of money transferred from the bank according to the commodity price will be deducted at once after the transaction between the subscriber and the merchant is finished.

The above is simple description to the data stream of the mobile payment, and a specific operation is realized through the specification and operation flows of prevalent payment safety standard at present like PBOC, QPBOC, UPCARD, EMV, etc.

Second situation: by using a legal and effective digital certificate in the mobile phone subscriber identity card on multichannel digital authentication of mobile payment according to the present invention as an individual identity basis and conducting near field card reading operation with a POS on a mobile payment spot through an APPS of a smartphone terminal and offline authentication, so as to finish the operations of deducting petty transaction sums, updating or removing electronic bill data records, processing merchant consumption point records as well as issuing and receiving merchant negotiable securities and financial values in the E-wallet of the subscriber.

The merchant negotiable securities and financial values mentioned here mainly include: all securities having financial values, for example: electronic bills, consumption points, business coupons, gift certificates and the like, which refer to a form that can be exchanged with equivalent commodity via a certain financial values; when being reflected in the mobile phone subscriber identity card on multichannel digital authentication of mobile payment according to the present invention, the securities refer to a special data recording form; and in the mobile phone subscriber identity card on multichannel digital authentication of mobile payment according to the present invention, such operations like establishing, modifying, removing and the like can be conducted on the securities under the MCU software.

The mobile phone subscriber identity card on multichannel digital authentication of mobile payment according to the present invention also has perfect backgrounding function during practical application. Foreground payment transaction will be saved and backed up in background and cloud; if the mobile phone is lost or stolen, as long as the subscribe applies for loss register, the cash balance saved in the wallet of the mobile phone subscriber identity card on multichannel digital authentication of mobile payment according to the present invention, which may be possibly stolen before the loss register, will be locked once the loss register is successful, and cannot be used again, and all the authority authentication and payment functions including the telecommunication function will lose effect. The subscriber can transact a procedure for making up a card again through the authentication center, and the all the functions and the amount of money in the E-wallet will be restored.

The foregoing embodiments are merely used for further explaining the mobile phone subscriber identity card on multichannel digital authentication of mobile payment of the present invention, but the present invention is not limited to the embodiments. Any simple amendment, equivalent change and modification made on the above embodiments according to the technical essence of the present invention shall all fall within the scope of the technical solutions of the present invention.

### Industrial applicability

According to the mobile phone subscriber identity card on multichannel digital authentication of mobile payment of the present invention, one or more digital authentication certificates are stored in the MCU security chip of the in-card circuit thereof, and the digital certificate authentication processing module for processing the authentication process of the digital authentication certificate is provided therein; the mobile payment performed by the mobile phone subscriber identity card using the mobile phone terminal cannot be limited by telecommunication operators and financial banks, but is commanded by the subscriber, thereby achieving the object of realizing the mobile payment for various consumptions securely, quickly and conveniently.

## Claims

1. A mobile phone subscriber identity card on multichannel digital authentication of mobile payment, comprising a card body and an in-card circuit integrated in the dimensional space of the card body, wherein the in-card circuit comprises an MCU security chip, a radio frequency driving unit, a radio frequency antenna and an SIM card standard copper connecting contacts; the radio frequency antenna, the radio frequency antenna, the MCU security chip and the SIM card standard copper connecting contacts are connected in sequence; subscriber identity authentication information for implementing mobile communication is stored in the MCU security chip, the MCU security chip is connected to a mobile phone terminal through the SIM card standard copper connecting contacts, so as to send the subscriber identity authentication information to the mobile phone terminal, and then the mobile phone terminal conducts subscriber identity authentication with a telecommunication operator; an E-wallet for implementing payment based on near field communication is also stored in the MCU security chip, and the MCU security chip is matched with an external card reader through the radio frequency driving unit and the radio frequency antenna, so as to implement the payment function of the E-wallet; one or more digital authentication certificates are also stored in the MCU security chip; the digital authentication certificate is an electronic document that uniquely binds the personal identity information of the mobile phone subscriber to an electronic signature, is applied by the mobile phone subscriber from a third-party authentication institution, issued by the third-party authentication institution, and is written in the MCU security chip by a designated institution having a certain authority; the MCU security chip is also provided with a digital certificate authentication processing module for processing an authentication process of the digital authentication certificate; the in-card circuit further comprises a data link for being connected between the MCU security chip and the mobile phone terminal, and is used for transmitting data of the digital authentication process; and the digital certificate authentication processing module of the MCU security chip is connected to a mobile phone terminal through the data link, and is connected to the third-party authentication institution through a network resource of the mobile phone terminal in an online manner, so as to conduct digital certificate authentication.

2. The mobile phone subscriber identity card on multichannel digital authentication of mobile payment according to claim 1, **characterized in that** the data link employs an ISO7816 interface of the MCU security chip and the mobile phone terminal as a connection channel, and implements data stream communications of the mobile phone terminal and the mobile phone subscriber identity card under the ISO7816 interface on digital certificate operation and processing through expanding an APDU instruction set.

3. The mobile phone subscriber identity card on multichannel digital authentication of mobile payment according to claim 1, **characterized in that** the data link employs a data transmission channel newly added between the MCU security chip and the mobile phone terminal and reflected in a hardware manner, so as to implement data transmission between the mobile phone terminal and the digital certificate authentication processing module of the MCU security chip.

4. The mobile phone subscriber identity card on multichannel digital authentication of mobile payment according to claim 3, **characterized in that** the data transmission channel reflected in a hardware manner is a wired transmission channel or wireless transmission channel.

5. The mobile phone subscriber identity card on multichannel digital authentication of mobile payment according to claim 1, **characterized in that** the data link employs a processing element additionally disposed on the mobile phone subscriber identity card and matched with an existing data transmission device of the mobile phone terminal, so as to implement matching butt with the existing resource of the mobile phone, thus implementing the data transmission between the mobile phone terminal and a digital certificate authentication and processing device.

6. The mobile phone subscriber identity card on multichannel digital authentication of mobile payment according to claim 5, **characterized in that** the processing element is a bluetooth protocol processing element disposed in the radio frequency driving unit.

7. The mobile phone subscriber identity card on multichannel digital authentication of mobile payment according to claim 1, **characterized in that** an application method thereof is: by using legal and effective digital certificate in the identity card as an identity basis and conducting online authentication between an APPS of a smartphone terminal and a CA authentication center, the subscriber transfers temporary money to the prepaid E-wallet, thus finishing on-spot mobile payment based on rated or variable consumptions.

8. The mobile phone subscriber identity card on multichannel digital authentication of mobile payment according to claim 1, **characterized in that** an application method thereof is: by using legal and effective digital certificate in the identity card as an personal identity basis and conducting near field card reading operation with a POS on a mobile payment spot through an APPS of a smartphone terminal and offline authentication, so as to finish the operations of deducting petty transaction sums, updating or removing electronic bill data records, processing merchant consumption point records as well as issuing and receiving merchant negotiable securities and financial values in the E-wallet of the subscriber.
